# EUROPÄISCHE PATENTSCHRIFT

(11) **EP 2 756 186 B1**
(45) Veröffentlichungstag und Bekanntmachung des Hinweises auf die Patenterteilung: **07.10.2015**
(21) Anmeldenummer: 12729882.6
(22) Anmeldetag: 26.06.2012
(51) Int. Cl.: F03B 3/10, F03B 13/06, F03B 13/08, F03B 15/00

(54) **HYDRAULISCHE MASCHINE MIT OBEN LIEGENDEM SAUGKRÜMMER**
HYDRAULIC MACHINE HAVING AN INTAKE MANIFOLD LOCATED AT THE TOP
MACHINE HYDRAULIQUE SUR LAQUELLE EST SITUÉ UN COLLECTEUR D'ADMISSION

(30) Priorität: 14.09.2011 DE 102011113442
(43) Veröffentlichungstag der Anmeldung: 23.07.2014
(73) Patentinhaber: Voith Patent GmbH, 89522 Heidenheim (DE)
(72) Erfinder: SCHABASSER, Martin, A-3123 Obritzberger (AT)
(74) Vertreter: Dr. Weitzel & Partner
(86) Internationale Anmeldenummer: PCT/EP2012/002677
(87) Internationale Veröffentlichungsnummer: WO 2013/037434

(56) Entgegenhaltungen:
- DE-A1- 1 503 297
- DE-A1- 1 528 820
- DE-A1- 2 630 642
- FR-A5- 2 219 690
- US-A- 1 681 711
- US-A- 3 890 059

## Beschreibung

Die Erfindung betrifft eine hydraulische Maschine, insbesondere eine Pumpturbine nach dem Oberbegriff der Ansprüche 1 beziehungsweise 2. Die Erfindung betrifft weiterhin eine Verfahren zum Befüllen beziehungsweise Entleeren einer solchen Maschine nach Ansprüchen 8 beziehungsweise 9 sowie deren bevorzugte Verwendung nach Anspruch 11.

In Wasserkraftwerken eingesetzte Pumpturbinen weisen zwei Betriebsmodi auf, nämlich einen Turbinenbetrieb und einen Pumpbetrieb. Im letzteren pumpt die Pumpe Wasser aus einem Unterbecken in ein Oberbecken und wird dafür durch eine elektrische Maschine angetrieben, welche in Triebverbindung mit der Pumpe steht. Die elektrische Maschine wird dabei aus einem öffentlichen Stromnetz gespeist, das heißt mit elektrischer Leistung versorgt. Im Turbinenbetrieb hingegen treibt das Wasser, welches aus dem Oberbecken durch die Turbine in das Unterbecken strömt, die Turbine an, welche eine entsprechende Leistung auf die elektrische Maschine überträgt. Die elektrische Maschine wandelt die Antriebsleistung in elektrische Leistung um und speist diese ins Stromnetz. Somit arbeitet die elektrische Maschine einmal als Generator und einmal als Motor. Sie wird daher auch als Motor-Generator bezeichnet.

Im Gegensatz zu den oben genannten Pumpturbinen sind auch reversible Pumpturbinen bekannt geworden, bei welchen die Turbine und Pumpe von einem gemeinsamen Laufrad gebildet wird, so dass im Turbinenbetrieb das gemeinsame Laufrad zur Erzeugung elektrischer Leistung mit Wasser aus dem Oberbecken beaufschlagt und im Pumpbetrieb durch die elektrische Maschine angetrieben wird.

Da derartige Pumpspeicherkraftwerke für den Ausgleich von Lastspitzen im Stromnetz herangezogen werden, muss die Pumpturbine möglichst schnell in die Lage versetzt werden, Turbinenleistung zu liefern, um das Stromnetz zu unterstützen beziehungsweise rasch Pumpleistung aufzunehmen, um für primäre Netzregelung eingesetzt zu werden. Es ist daher wünschenswert, dass die Pumpturbine eines Pumpspeicherkraftwerks aus dem Turbinenbetrieb möglichst schnell in den Pumpbetrieb versetzt werden kann, und umgekehrt.

Beim Übergang von der Betriebsart Phasenschieben in die Betriebsart Pumpen- oder Turbinenbetrieb ist es dabei erforderlich, das entwässerte Laufrad zu füllen. Üblicherweise liegt der Saugkrümmer unten, so dass durch gezieltes Entlüften der Wasserspiegel kontrolliert bis zur vollständigen Entleerung gehoben werden kann. Liegt der Saugkrümmer dagegen über der Pumpe, würde dessen rasches Füllen allerdings ein unkontrolliertes Füllen des Laufrads nach sich ziehen.

Für einen ruhigen Füllvorgang ist es nun vorteilhaft, wenn das sich drehende Laufrad soweit als möglich mit dem Oberwasserdruck von der Hochdruckseite her gefüllt wird. Bei üblicher Anordnung des Saugkrümmeres ist das kein Problem, da die Luft im Saugkrümmer nicht entweichen würde. Bei einem obenliegenden Saugkrümmer würde allerdings beim Öffnen des unterwasserseitigen Absperrorgans sofort die gesamte Luft entweichen, womit ein kontrolliertes Füllen nicht mehr möglich wäre. Das Öffnen eines hochdruckseitigen Absperrorgans, wie zum Beispiel einem Leitapparat, einem Ringgate, einem Kugelschieber oder Ähnlichem, würde bei gleichzeitigem Geschlossenhalten des unterwasserseitigen Absperrorgans aber ein erhebliches Sicherheitsrisiko bedeuten. Dann bestünde nämlich die Gefahr, dass der gesamte Saugkrümmer mit dem hohen Oberwasserdruck beaufschlagt wird, wenn zum Beispiel während des Füllvorgangs, bei dem das Unterwasserabsperrorgan noch geschlossen ist, ein Lastabwurf stattfindet.

Umgekehrt ist es beim Übergang von der Betriebsart Pumpenbetrieb in die Betriebsart Phasenschieben erforderlich, das gefüllte Laufrad zu entleeren. Üblicherweise liegt der Saugkrümmer unten, so dass durch gezieltes Belüften der Wasserspiegel kontrolliert abgesenkt werden kann. Bei einem über der Pumpe liegenden Saugkrümmer ist das dagegen bislang nicht möglich.

Pumpturbineanlagen gemäß dem Stand der Technik sind aus DE 1 528 820 und US 3 890 059 bekannt.

Es ist Aufgabe der vorliegenden Erfindung, die vorstehend genannten Probleme zu lösen und eine Pumpturbineanlage bereitzustellen, die mit einem oberhalb des Laufrads angeordnetem Saugkrümmer ein kontrolliertes, rasches und zuverlässiges Füllen des Laufrads von der Hochdruckseite aus zulässt, ohne Gefahr zu laufen, dass der Saugkrümmer mit dem hohen Oberwasserdruck beaufschlagt wird. Gleichzeitig soll die Lösung einfach umsetzbar und kostengünstig realisierbar sein.

Diese Aufgabe wird durch eine Pumpturbine nach den kennzeichnenden Merkmalen des Anspruchs 1 beziehungsweise 2 gelöst.

Ein wesentlicher Punkt der erfindungsgemäßen Anlage besteht darin, dass der Saugkrümmer oberhalb des Laufrads angeordnet ist, und wenigstens eine Umgehungsleitung zum Umgehen des Leit- und/oder Verschlussapparats vorgesehen ist, welche die Einlaufspirale direkt mit dem Laufrad verbindet, wenn ein im Verlauf dieser Umgehungsleitung angeordnetes Umgehungsventil geöffnet ist. Mit diesen Umgehungsleitungen kann das Laufrad an dem geschlossenen Leit- und/oder Verschlussapparat vorbei gezielt gefüllt werden. Durch Ausstattung der Anlage zum Beispiel mit einem Ringgate ist es so möglich, die Einlaufspirale ständig mit dem Oberwasserdruck beaufschlagt zu halten, was die Lebensdauer deutlich erhöht und zudem die Zeiten für die Betriebsübergänge minimiert, da die Spirale nicht gefüllt beziehungsweise entleert zu werden braucht. Von den Umgehungsleitungen kann es dabei eine oder mehrere geben, welche nach den Absperrorganen direkt in die Maschine vor oder nach dem Leitapperat, bevorzugt in den Seitenraum des Laufrads münden, so dass der Strömungskanal nicht durch Einbauten beziehungsweise Öffnungen gestört wird. Idealerweise mündet eine Umgehungsleitung in einen oberen und/oder unteren Turbinen- beziehungsweise Pumpendeckel. Die Umgehungsleitungen können auch im Ringraum zwischen Ringgate und Leitapparat angeordnet sein. In diesem Falle kann der Leitapparat zum Entleeren/Belüften beziehungsweise zum Füllen/Entlüften geschlossen oder in einer Zwischenstellung größer als in der Schließstellung sein.

Die Umgehungsleitung kann über ein Ventil direkt mit der Einlaufspirale verbunden sein. Bevorzugt ist der Querschnitt der Umgehungsleitung kleiner zu wählen ist als der Querschnitt der Entlüftungsleitung im Saugkrümmer, so dass es im Fall von zum Beispiel einem Lastabwurf während der Füllvorganges zu keinem unzulässigen Druckanstieg im Saugkrümmer kommen kann. Das Ventil in der Umgehungsleitung muss so verriegelt sein, dass es erst nach dem Öffnen des Entlüftungsventils im Saugkrümmer geöffnet werden kann und vor dem Schließen den Entlüftungsventils bereits wieder geschlossen ist.

Über die Umgehungsleitung kann das Pumpenlaufrad bei laufender Maschine soweit gefüllt werden, wie es mit dem Oberwasserdruck möglich ist. Der kleine verbleibende Rest kann von der Saugseite her gefüllt werden.

Ein weiterer wesentlicher Punkt der erfindungsgemäßen Anlage besteht darin, dass der Saugkrümmer oberhalb des Laufrads angeordnet ist, und wenigstens eine Entleerungsleitung zum Entleeren des Laufrads vorgesehen ist, welche das Laufrad direkt mit einem Pumpensumpf verbindet, wenn ein im Verlauf dieser Entleerungsleitung angeordnetes Entleerungsventil geöffnet ist. Bei abgeschlossenen unterwasserseitigen und oberwasserseitigen Absperrorganen kann das Laufrad damit entwässert werden.

Die Anordnung im Radseitenraum macht es nicht nötig, Einbauten oder Öffnungen in dem Strömungskanal zu platzieren. Auch von den Entleerungsleitungen kann es eine oder mehrere geben, idealerweise am unteren, oberen oder beiden Turbinenbeziehungsweise Pumpendeckeln. Bevorzugt weisen diese einen geringeren Querschnitt als die Belüftungsleitungen auf, damit in dem Laufradraum kein Unterdruck erzeugt wird, der einer stetigen Entleerung entgegenwirkt.

Die Entleerungsleitungen führen in den Pumpensumpf. Durch die Anordnung der Entleerungsleitungen im Radseitenraum ist es zudem möglich, den vollen Pumpendruck zum Entleeren zu nutzen, so dass die Entleerungszeit minimiert werden kann. Gleichzeitig, durch die Anordnung im Radseitenraum, kann zum Beispiel ein Ringgate dazu genutzt werden, den Laufradraum von der Spirale zu trennen, so dass die Einlaufspirale nicht entleert zu werden braucht.

Die erfindungsgemäße Anlage ist grundsätzlich nicht auf die alleinige Anbringung eines Leitungstyps beschränkt, sondern kann anforderungsabhängig jede gewünschte Anzahl und Kombination sowohl von Umgehungsleitungen wie auch von Entleerungsleitungen aufweisen.

Die vorliegende Erfindung wird im Folgenden anhand eines Ausführungsbeispiels unter Bezugnahme auf die beiliegenden Figuren näher erläutert. Gleiche oder gleichwirkende Teile sind mit gleichen Bezugsziffern versehen. Es zeigen:
- Figur 1: eine Seitenansicht einer erfindungsgemäßen Pumpturbine der Francis-Bauart, mit einem Laufrad, das um eine Rotationsachse drehbar gelagert ist, und einer Einlaufspirale, die dieses Laufrad ringförmig umgreift, und mit einem über dem Laufrad liegenden Saugkrümmer, und
- Figur 2: eine geschnittene Seitenansicht eines Teils der erfindungsgemäßen Pumpturbine gemäß Figur 1, um die Lage der Umgehungsleitungen beziehungsweise der Entleerungsleitungen zu verdeutlichen.

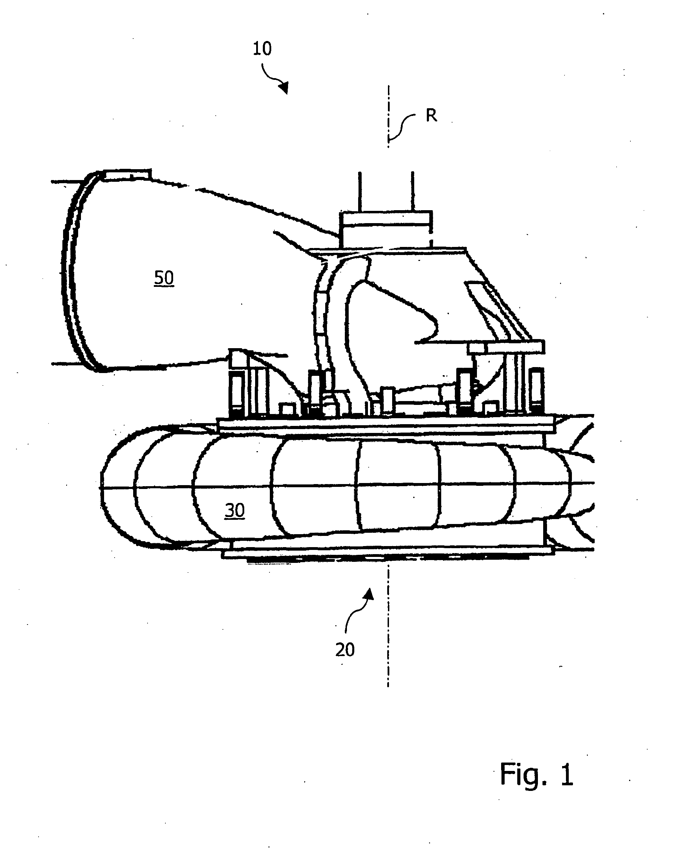

Figur 1 zeigt eine Seitenansicht einer erfindungsgemäßen Pumpturbine 10 der Francis-Bauart, mit einem Laufrad 20 (nicht sichtbar), das um eine Rotationsachse R drehbar gelagert ist, und einer Einlaufspirale 30, die dieses Laufrad 20 ringförmig umgreift, und mit einem über dem Laufrad 20 liegenden Saugkrümmer 50. Bei einer solchen Pumpturbine 10 strömt das Wasser aus einer am Innenumfang der Einlaufspirale 30 vorhandenen Austrittsöffnung radial zur Rotationsachse R in das Laufrad 20 ein. In dem Laufrad 20 wird das Wasser unter Abgabe seiner Energie in Richtung der Rotationsachse R nach oben umgelenkt, während sich das Laufrad 20 in Drehung versetzt. Das Wasser wird schließlich über den Saugkrümmer 50 einem daran angeschlossenen Saugrohr (nicht dargestellt) zugeführt.

Beim Übergang von der Betriebsart Phasenschieben in die Betriebsart Pumpen- oder Turbinenbetrieb ist es nun erforderlich, das entwässerte Laufrad zu füllen. Üblicherweise liegt der Saugkrümmer unten, so dass durch gezieltes Entlüften der Wasserspiegel kontrolliert bis zur vollständigen Entleerung gehoben werden kann. Liegt der Saugkrümmer dagegen über der Pumpe, würde dessen rasches Füllen allerdings ein unkontrolliertes Füllen des Laufrades nach sich ziehen.

Umgekehrt ist es beim Übergang von der Betriebsart Pumpenbetrieb in die Betriebsart Phasenschieben erforderlich, das gefüllte Laufrad zu entleeren. Üblicherweise liegt der Saugkrümmer unten, so dass durch gezieltes Belüften der Wasserspiegel kontrolliert abgesenkt werden kann. Bei einem über der Pumpe liegenden Saugkrümmer ist das dagegen bislang nicht möglich.

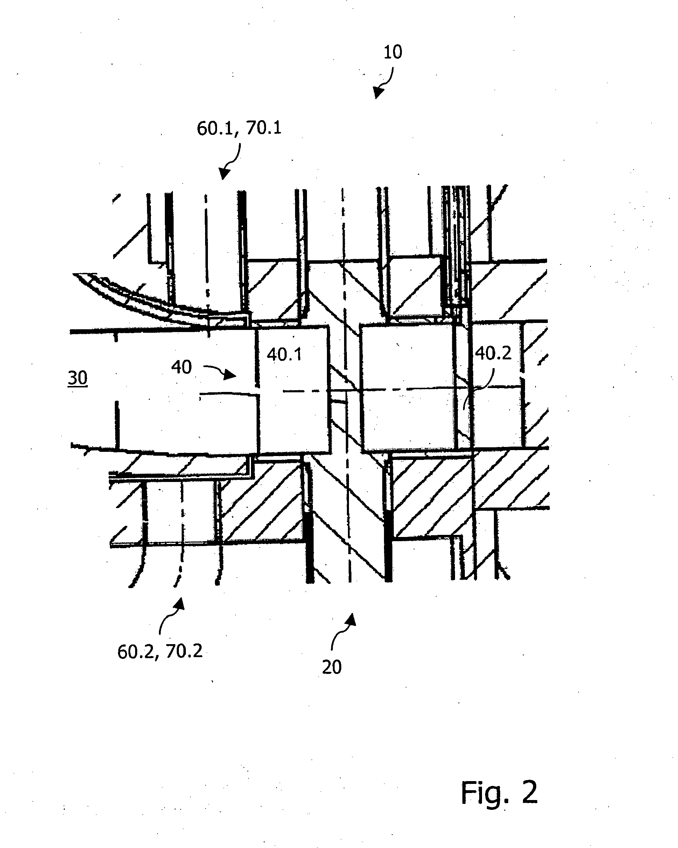

Die Figur 2 zeigt nun eine geschnittene Seitenansicht eines Teils der erfindungsgemäßen Pumpturbine 10 gemäß Figur 1, um die Lage der Umgehungsleitungen 60.1, 60.2 beziehungsweise der Entleerungsleitungen70.1, 70.2 zu verdeutlichen. Die Umgehungsleitungen 60.1, 60.2 umgehen hierbei einen Leit- und Verschlussapparat 40 und münden in einen unteren und oberen Turbinen- beziehungsweise Pumpendeckel. Der Leit- und Verschlussapparat 40 kann dabei aus Leitschaufeln 40.1 und einem Ringgate 40.2 bestehen. Bei zum Beispiel geschlossenem Ringgate 40.2 kann damit das Laufrad 20 gleichsam rasch und kontinuierlich von der Hochdruckseite her gefüllt werden, wobei die Luft über eine (nicht dargestellte) Entlüftungsleitung abgeführt wird. Die Querschnitte der Umgehungsleitungen 60.1, 60.2 sind bevorzugt kleiner als die der Entlüftungsleitungen ausgeführt, um einen Überdruck im Laufradraum zu vermeiden.

Umgekehrt kann das Laufrad 20 bei hoch- und niederdruckseitig geschlossenen Absperrorganen über die Entleerungsleitungen 70.1, 70.2 entleert werden, wobei eine (nicht dargestellte) Belüftungsleitung geöffnet wird. Die Querschnitte der Entleerungsleitungen 70.1, 70.2 sind dabei ebenfalls bevorzugt kleiner als die der Belüftungsleitungen ausgeführt, um einen Unterdruck im Laufradraum zu vermeiden.

Sowohl die Umgehungsleitungen 60.1, 60.2 wie auch die Entleerungsleitungen 70.1, 70.2 sind mit Ventilen ausgestattet, die deren zuverlässige Öffnung beziehungsweise Schließung ermöglichen. Beide Leitungsarten sind konstruktiv einfach umzusetzen und damit kostengünstig realisierbar. Die Ventile können in Abhängigkeit anderer hoch- und niederdruckseitiger Absperrorgane folgerichtig ansteuerbar sein, zum Beispiel mittels computerimplementierter oder numerischer Steuerungen, um eine Bewässerung beziehungsweise Entleerung des Laufrads 20 durchzuführen. Die Spirale 30 muss in keinem der beiden Fälle entlastet und entwässert werden, was einen erheblichen Zeitgewinn beim Umschalten zwischen Phasenschieben und Pumpen- beziehungsweise Turbinenbetrieb darstellt. Gleichzeitig steigt die Lebensdauer der Pumpturbine deutlich an.

Obwohl die vorliegende Erfindung in Bezug auf eine Pumpturbine beschrieben wurde, kann sie prinzipiell auch nur in einer Pumpe oder nur in einer Turbine verwirklicht sein, sofern eine rasche Füllung beziehungsweise Entwässerung gefordert ist. Die erfindungsgemäßen Vorteile sind auch daran zu beobachten. In diesem speziellen Fall erforderliche Anpassungen des Querschnitts und der Anzahl sowie Kombination von Umgehungsleitungen und Entleerungsleitungen stehen im Wissen und Können des Fachmanns.

### Bezugszeichenliste

- 10: Pumpturbine
- 20: Laufrad
- 30: Einlaufspirale
- 40: Leit- und/oder Verschlussapparat
- 40.1: Leitschaufeln
- 40.2: Ringgate
- 50: Saugkrümmer
- 60.1,60.2: Umgehungsleitung
- 70.1,70.2: Entleerungsleitung
- R: Rotationsachse

## Patentansprüche

1. Hydraulische Maschine (10) wie Turbinen oder Pumpe oder Pumpturbine (10), mit
einem Laufrad (20), das um eine vertikal stehende Rotationsachse (R) drehbar gelagert ist und eine Vielzahl von Laufschaufeln aufweist;
einer Einlaufspirale (30), die das Laufrad (20) ringförmig umgreift und die auf ihrem inneren Umfangsring eine umlaufende Austrittsöffnung aufweist; einem verschließbaren Leit- und/oder Verschlussapparat (40) zum Regeln der Einströmung in das Laufrad (20), und
einem Saugkrümmer (50) zum Führen des aus dem Laufrad (20) ausströmenden Wassers, **dadurch gekennzeichnet, dass**
der Saugkrümmer (50) oberhalb des Laufrads (20) angeordnet ist, und wenigstens eine Umgehungsleitung (60.1, 60.2) zum Umgehen des Leit- und/oder Verschlussapparats (40) vorgesehen ist, welche die Einlaufspirale (30) direkt mit dem Laufrad (20) verbindet, wenn ein im Verlauf dieser Umgehungsleitung (60.1, 60.2) angeordnetes Umgehungsventil geöffnet ist.

2. Hydraulische Maschine mit Turbinen oder Pumpturbine (10), mit
einem Laufrad (20), das um eine vertikal stehende Rotationsachse (R) drehbar gelagert ist und eine Vielzahl von Laufschaufeln aufweist;
einer Einlaufspirale (30), die das Laufrad (20) ringförmig umgreift und die auf ihrem inneren Umfangsring eine umlaufende Austrittsöffnung aufweist; einem verschließbaren Leit- und/oder Verschlussapparat (40) zum Regeln der Einströmung in das Laufrad (20), und
einem Saugkrümmer (50) zum Führen des aus dem Laufrad (20) ausströmenden Wassers, **dadurch gekennzeichnet, dass**
der Saugkrümmer (50) oberhalb des Laufrads (20) angeordnet ist, und wenigstens eine Entleerungsleitung (70.1, 70.2) zum Entleeren des Laufrads (20) vorgesehen ist, welche das Laufrad (20) direkt mit einem Pumpensumpf verbindet, wenn ein im Verlauf dieser Entleerungsleitung (70.1, 70.2) angeordnetes Entleerungsventil geöffnet ist.

3. Hydraulische Maschine mit Turbinen oder Pumpturbine (10) nach Anspruch 1 oder 2, bei welcher die wenigstens eine Umgehungsleitung (60.1, 60.2) beziehungsweise die wenigstens eine Entleerungsleitung (70.1, 70.2) vorzugsweise einen kleineren Leitungsquerschnitt aufweist als eine Entlüftungsleitung zum Entlüften beziehungsweise eine Belüftungsleitung zum Belüften des Laufrads (20).

4. Hydraulische Maschine mit Turbinen oder Pumpturbine (10) nach einem der vorstehenden Ansprüche, bei welcher die wenigstens eine Umgehungsleitung (60.1, 60.2) und/oder die wenigstens eine Entleerungsleitung (70.1, 70.2) in einen Radseitenraum des Laufrads (20) mündet.

5. Hydraulische Maschine mit Turbinen oder Pumpturbine (10) nach einem der vorstehenden Ansprüche, bei welcher die wenigstens eine Umgehungsleitung (60.1, 60.2) und/oder die wenigstens eine Entleerungsleitung (70.1, 70.2) in einen oberen und/oder unteren Pumpendeckel mündet.

6. Hydraulische Maschine mit Turbinen oder Pumpturbine (10) nach einem der vorstehenden Ansprüche, **gekennzeichnet durch** die Anordnung der Leitungsanschlüsse im Ringraum zwischen Ringgate und Leitapparat.

7. Hydraulische Maschine mit Turbinen oder Pumpturbine (10) nach Anspruch 6, **dadurch gekennzeichnet, dass** der Leitapparat zum Entleeren/Belüften beziehungsweise Füllen/Entlüften geschlossen oder in einer Zwischenstellung größer als in der Schließstellung ist.

8. Verfahren zum Befüllen einer hydraulische Maschine mit Turbinen oder Pumpturbine (10) nach Anspruch 1, bei dem zunächst der Leit- und/oder Verschlussapparat (40) geschlossen wird, danach wenigstens eine Entlüftungsleitung zum Entlüften des Laufrads (20) und schließlich wenigstens eine Umgehungsleitung (60.1, 60.2) zum Umgehen des Leit- und/oder Verschlussapparats (40) geöffnet wird, so dass Wasser von der Einlaufspirale (30) direkt in das Laufrad (20) einströmen und Luft aus dem Laufrad (20) entweichen kann.

9. Verfahren zum Entleeren einer hydraulische Maschine mit Turbinen oder Pumpturbine (10) nach Anspruch 2, bei dem ein hochdruckseitiges und ein niederdruckseitiges Absperrorgan geschlossen wird, danach eine Belüftungsleitung zum Belüften des Laufrads (20) und schließlich wenigstens eine Entleerungsleitung (70.1, 70.2) zum Entleeren des Laufrads (20) geöffnet wird, so dass Wasser aus dem Laufrad (20) direkt in einen Pumpensumpf ausströmen kann.

10. Verfahren nach Anspruch 8 oder 9, bei dem nach dem Befüllen beziehungsweise Entleeren des Laufrads (20) die Umgehungsleitung (60.1, 60.2) beziehungsweise die Entleerungsleitung (70.1, 70.2) wieder geschlossen und danach die Entlüftungsleitung beziehungsweise die Belüftungsleitung wieder geschlossen wird.

11. Verwendung einer hydraulische Maschine mit Turbinen oder Pumpturbine (10) nach Anspruch 1 oder 2 in einem Pumpspeicherkraftwerk.

## Claims

1. A hydraulic machine (10) such as turbines or a pump or a pump turbine (10), comprising
a blade wheel (20) which is rotatably mounted about a vertically disposed rotational axis (R) and comprises a plurality of blade wheels;
an inlet spiral (30) which surrounds the blade wheel (20) in a ring-like manner and which comprises a circumferential outlet opening on its inner circumferential ring;
a closeable guide and closure apparatus (40) for controlling the inflow into the blade wheel (20), and
a draft tube bend (50) for guiding the water flowing out of the blade wheel (20), **characterized in that**
the draft tube bend (50) is arranged above the blade wheel (20), and
at least one bypass pipe (60.1, 60.2) is provided for bypassing the guide and/or closure apparatus (40), which bypass pipe connects the inlet spiral (30) directly to the blade wheel (20) when a bypass valve is opened which is arranged in the course of said bypass pipe (60.1, 60.2).

2. A hydraulic machine with turbines or pump turbine (10), comprising
a blade wheel (20) which is rotatably mounted about a vertically disposed rotational axis (R) and comprises a plurality of blade wheels;
an inlet spiral (30) which surrounds the blade wheel (20) in a ring-like manner and which comprises a circumferential outlet opening on its inner circumferential ring;
a closeable guide and closure apparatus (40) for controlling the inflow into the blade wheel (20), and
a draft tube bend (50) for guiding the water flowing out of the blade wheel (20), **characterized in that**
the draft tube bend (50) is arranged above the blade wheel (20), and
at least one discharge pipe (70.1, 70.2) is provided for discharging the blade wheel (20), which discharge pipe connects the blade wheel (20) directly to a pump sump when a discharge valve is opened which is arranged in the course of said discharge pipe (70.1, 70.2).

3. A hydraulic machine with turbines or pump turbine (10) according to claim 1 or 2, wherein the at least one bypass pipe (60.1, 60.2) or the at least one discharge pipe (70.1, 70.2) preferably has a smaller pipe diameter than a ventilation pipe for venting or an aeration pipe for aerating the blade wheel (20).

4. A hydraulic machine with turbines or pump turbine (10) according to one of the preceding claims, wherein the at least one bypass pipe (60.1, 60.2) and/or the at least one discharge pipe (70.1, 70.2) opens into a lateral wheel space of the blade wheel (20).

5. A hydraulic machine with turbines or pump turbine (10) according to one of the preceding claims, wherein the at least one bypass pipe (60.1, 60.2) and/or the at least one discharge pipe (70.1, 70.2) opens into an upper and/or bottom pump cover.

6. A hydraulic machine with turbines or pump turbine (10) according to one of the preceding claims, **characterized by** the arrangement of the pipe connections in the ring space between ring gate and guide apparatus.

7. A hydraulic machine with turbines or pump turbine (10) according to claim 6, **characterized in that** the guide apparatus for discharging/aerating or filling/venting is closed or is larger in an intermediate position than in the closed position.

8. A method for filling a hydraulic machine with turbines or pump turbine (10) according to claim 1, wherein the guide and/or closure apparatus (40) is closed at first, whereupon at least one ventilation pipe is opened for venting the blade wheel (20) and finally at least one bypass pipe (60.1, 60.2) is opened for bypassing the guide and/or closure apparatus (40), so that water can flow directly from the inlet spiral (30) into the blade wheel (20) and air can escape from the blade wheel (20).

9. A method for discharging a hydraulic machine with turbines or pump turbine (10) according to claim 2, wherein a closing valve on the highpressure and low-pressure side is closed, whereupon an aeration pipe for aerating the blade wheel (20) and finally at least one discharge pipe (70.1, 70.2) is opened for discharging the blade wheel (20), so that water can flow directly from the blade wheel (20) to a pump sump.

10. A method according to claim 8 or 9, wherein the bypass pipe (60.1, 60.2) or the discharge pipe (70.1, 70.2) is closed again after the filling or discharging of the blade wheel (20), and thereafter the ventilation pipe or the aeration pipe is closed again.

11. The use of a hydraulic machine with turbines or pump turbine (10) according to claim 1 or 2 in a pump storage power plant.

## Revendications

1. Machine hydraulique (10) de type turbines ou pompe ou turbine de pompe (10), avec
un rotor (20), qui est monté rotatif autour d'un axe de rotation vertical (R) et présente une pluralité de pales ;
une spirale d'admission (30) qui enserre le rotor (20) en forme d'anneau et présente sur son anneau périphérique interne une ouverture de sortie périphérique ;
un appareil de guidage et/ou de fermeture verrouillable (40) pour réguler l'écoulement d'entrée dans le rotor (20),
un coude d'aspiration (50) pour le guidage de eau s'écoulant hors du rotor (20), caractérisée en ce
le coude d'aspiration (50) est disposé au-dessus du rotor (20) et au moins un canal de dérivation (60.1, 60.2) est prévu pour contourner l'appareil de guidage et/ou de fermeture (40), qui relie la spirale d'admission (30) directement au rotor (20) si une soupape de dérivation disposée dans le tracé de ce canal de dérivation (60.1, 60.2).

2. Machine hydraulique avec turbines ou turbine de pompe (10), avec
un rotor (20), qui est monté rotatif autour d'un axe de rotation vertical (R) et présente une pluralité de pales ;
une spirale d'admission (30) qui enserre le rotor (20) en forme d'anneau et présent sur son anneau périphérique interne une ouverture de sortie périphérique ;
un appareil de guidage et/ou de fermeture verrouillable (40) pour réguler l'écoulement d'entrée dans le rotor (20), et un coude d'aspiration (50) pour le guidage de l'eau s'écoulant hors du rotor (20), caractérisée en ce le coude d'aspiration (50) est disposé au-dessus du rotor (20), et au moins un canal de vidange (70.1, 70.2) est prévu pour vider le rotor (20), qui relie le rotor (20) directement à un puisard de pompe, si une soupape de vidange disposée dans le tracé de ce canal de vidange (70.1, 70.2) est ouverte.

3. Machine hydraulique avec turbines ou turbine de pompe (10), selon la revendication 1 ou la revendication 2, avec laquelle ledit au moins un canal de dérivation (60.1, 60.2) ou bien ledit au moins canal de vidange (70.1, 70.2) comporte de préférence une section de canal plus petite qu'un canal de désaération permettant de désaérer le rotor (20) ou qu'un canal d'aération permettant d'aérer le rotor.

4. Machine hydraulique avec turbines ou pompe à turbine (10) selon l'une des revendications précédentes, dans laquelle ledit au moins canal de dérivation (60.1, 60.2) et/ou ledit au moins un canal de vidange (70.1, 70.2) débouche dans une chambre de flasque de roue du rotor (20).

5. Machine hydraulique avec turbines ou pompe à turbine (10) selon l'une des revendications précédentes, dans laquelle ledit au moins canal de dérivation (60.1, 60.2) et/ou ledit au moins un canal de vidange (70.1, 70.2) débouche dans un couvercle de pompe supérieur et/ou inférieur.

6. Machine hydraulique avec turbines ou pompe à turbine (10) selon l'une des revendications précédentes, **caractérisée par** l'agencement des raccords de guidage dans la chambre annulaire entre la porte annulaire et l'appareil directeur.

7. Machine hydraulique avec turbines ou turbine de pompe (10), selon la revendication 6, **caractérisée en ce que** l'appareil directeur est fermé pour permettre la vidange/l'aération ou bien le remplissage/la désaération.

8. Procédé de remplissage d'une machine hydraulique avec turbines ou turbine de pompe (10), selon la revendication 1, dans lequel l'appareil de guidage et/ou de fermeture (40) est fermé, ensuite au moins un canal de désaération pour désaérer le rotor (20) et finalement au moins un canal de dérivation (60.1, 60.2) pour contourner l'appareil de guidage et/ou de fermeture (40) s'ouvre pour que l'eau puisse s'écouler de la spirale d'admission (30) directement dans le rotor (20) et que l'air puisse s'échapper du rotor (20).

9. Procédé de vidange d'une machine hydraulique avec turbines ou turbine de pompe (10), selon la revendication 2, dans lequel un organe de blocage haute pression et un organe de blocage basse pression sont fermés, ensuite un canal d'aération s'ouvre pour aérer le rotor (20) et finalement au moins un canal de vidange (70.1, 70.2) s'ouvre pour vider le rotor (20) pour que l'eau puisse s'écouler du rotor (20) directement dans un puisard de pompe.

10. Procédé selon la revendication 8 ou la revendication 9, dans lequel après le remplissage ou la vidange du rotor (20) le canal de dérivation (60.1, 60.2) ou bien le canal de vidange (70.1, 70.2) se ferme de nouveau et ensuite le canal de désaération ou bien le canal d'aération se ferme de nouveau.

11. Utilisation d'une machine hydraulique avec turbines ou turbine de pompe (10), selon la revendication 1 ou la revendication 2 dans une centrale de pompage-turbinage.
